# EUROPÄISCHE PATENTSCHRIFT

(11) **EP 1 533 451 B1**
(45) Veröffentlichungstag und Bekanntmachung des Hinweises auf die Patenterteilung: **19.07.2006**
(21) Anmeldenummer: 03026717.3
(22) Anmeldetag: 21.11.2003
(51) Int. Cl.: E05B 65/12, E05B 65/20

(54) **Baueinheit bestehend aus einer Handhabe und wenigstens einer Funktionseinheit**
Assembly comprising a handle and at least a functional unit
Ensamble comportant une poignée et d'au moins une unité fonctionnelle

(43) Veröffentlichungstag der Anmeldung: 25.05.2005
(73) Patentinhaber: Huf Hülsbeck & Fürst GmbH & Co. KG, 42551 Velbert (DE)
(72) Erfinder: Spies, Wolfgang Uwe, 42781 Haan (DE); Kamps, Rolf, 42119 Wuppertal (DE)
(74) Vertreter: Mentzel, Norbert

(56) Entgegenhaltungen:
- EP-A- 0 967 098
- DE-A- 10 060 780
- DE-A- 19 843 594
- DE-U- 1 712 979
- DE-U- 1 725 686
- US-A1- 2002 157 436
- US-A1- 2003 095 416

## Beschreibung

Die Erfindung bezieht sich auf eine Baueinheit der im Oberbegriff des Anspruches 1 genannten Art. Die so gestalteten Baueinheiten werden zumeist in oder an einem beweglichen Karosserieteil eines Kraftfahrzeugs, beispielsweise der Kofferraumklappe, angeordnet und dienen der Betätigung des dem Karosserieteil zugeordneten Schlosses sowie einer oder mehrerer weiterer Funktionen je nach Art der Funktionseinheit. Hierbei ist bisher als Funktion insbesondere die Beleuchtung des Fahrzeugnummernschildes sowie die Aufnahme des hinter dem Fahrzeug befindlichen Raumes mittels einer Kamera von besonderer Bedeutung, wobei diese hier verstärkt betrachtet werden sollen.

Im Stand der Technik wurden die Handhabe zur Betätigung des Schlosses und als Funktionseinheit die Leuchten für die Beleuchtung des Fahrzeugnummernschildes getrennt hergestellt und getrennt montiert. Dies ist jedoch zeit- und kostenintensiv. Außerdem sind in der Karosserie mehrere Öffnungen, meistens zwei oder drei, nötig, was zu mehrfachen Dichtigkeitsproblemen führt. Weiterhin erhöht jede Öffnung in der Karosserie das Risiko eines Diebstahls, weil durch die Öffnungen ein vereinfachter Zugriff auf das Fahrzeuginnere erfolgen kann. Um das Risiko eines Diebstahls zu verringern, muss daher jedes in eine Öffnung eingeführte Gehäuse von der Innenseite des von dem beweglichen Karosserieteils zu verschließenden Raumes her mit einer Metallverkleidung versehen werden. Die verschiedenen Gehäuse benötigen auch eine Vielzahl von Befestigungsstellen, was wiederum zeit- und kostenaufwendig ist.

Aus der DE 198 28 694 A1 ist eine Anordnung bekannt, bei der sich ein Schließzylinder für einen Klappenverschluss und mindestens eine Kennzeichenleuchte auf einem gemeinsamen Träger befinden. Hierdurch wird eine gemeinsame Baugruppe geschaffen, die eine vereinfachte Produktion und Montage ermöglicht. Trotzdem sind immer noch mehrere Öffnungen in der Karosserie nötig, wodurch die Nachteile von mangelnder Dichtigkeit und Diebstahlsicherheit weiterhin bestehen bleiben. Des Weiteren ist ein solcher Träger relativ platzaufwendig.

Aufgabe der Erfindung ist es daher, die vorgenannten Nachteile zu vermeiden und eine kostengünstige einfach zu montierende Baugruppe zu schaffen, die den Anforderungen an Dichtigkeit und Diebstahlsicherheit genügt. Dies wird erfindungsgemäß durch die im Anspruch 1 genannten Maßnahmen erreicht, denen folgende besondere Bedeutung zukommt.

Die Baueinheit enthält ein einziges Kombinationsgehäuse, in welchem sowohl die Handhabe zur Betätigung des Schlosses an dem beweglichen Karosserieteil als auch die Funktionseinheit integriert sind. Hierdurch ist nur eine einzige Öffnung in der Karosserie notwendig, die abgedichtet und diebstahlsicher gemacht werden muss. Vor allem nimmt diese kompakte Bauweise weniger Raum ein. Die Montage selbst ist besonders einfach, da die Baueinheit schon vormontiert werden kann und dann in einem einzigen Arbeitsschritt mit nur wenigen Befestigungsstellen an dem Karosserieteil montierbar ist.

Besonders vorteilhaft ist es als Funktionseinheit eine Leuchte oder Lichtaustrittsstelle einer Lichtquelle zur Beleuchtung des Fahrzeugkennzeichens vorzusehen. Hierbei ist insbesondere die Verwendung von Leuchtdioden (LED) als Leuchte oder Lichtquelle günstig. Diese LED haben einen viel geringeren Energieverbrauch und erwärmen sich während des Betriebs nicht wie andere Leuchten. Darüber hinaus sind sie klein und in den verschiedensten Leuchtstärken und Farben erhältlich. Sie lassen sich somit platzsparend in dem Kombinationsgehäuse integrieren und es besteht auch nicht die Gefahr, dass es bei versehentlicher Berührung der Leuchte während des Betriebes, beispielsweise bei der Benutzung der Handhabe, zu Verbrennungen der Bedienperson kommt.

Bei einer weiteren bevorzugten Ausführungsform stellt die Funktionseinheit eine Kamera dar, die den hinter dem Kraftfahrzeug befindlichen Raum erfasst. Hierdurch kann beim Rückwärtsfahren und/oder Einparken der sonst schwer einsehbare Bereich hinter dem Kraftfahrzeug durch geeignete Wiedergabemittel für der Fahrer sichtbar gemacht werden, um das Rückwärtsfahren einfacher und sicherer zu gestalten und das Risiko von Unfällen durch schlecht zu erkennende Hindernisse zu reduzieren.

Weitere Vorteile und Ausführungen der Erfindung ergeben sich aus den Unteransprüchen, sowie der nachfolgenden Beschreibung und den Zeichnungen. In den Zeichnungen ist der Erfindungsgegenstand in mehreren Ausführungsbeispielen dargestellt. Es zeigen:
- Fig. 1:: eine erfindungsgemäße Baueinheit in Fahrzeuglängsrichtung geschnitten wobei die Funktionseinheit eine Lichtaustrittsstelle ist, die an der Rückwand des Kombinationsgehäuses angeordnet ist
- Fig. 2:: eine erfindungsgemäße Baueinheit gemäß Fig. 1 von unten betrachtet
- Fig. 3:: eine erfindungsgemäße Baueinheit in Querrichtung geschnitten, wobei zwei Funktionseinheiten an den Seitenwänden des Kombinationsgehäuses angeordnet sind, die zwei Lichtaustrittsstellen darstellen
- Fig. 4:: die erfindungsgemäße Baueinheit gemäß Schnitt III-III in Fig. 3
- Fig. 5:: eine erfindungsgemäße Baueinheit in gleicher Schnittebene wie Fig. 1, in einer weiteren Ausführungsform
- Fig. 6:: eine erfindungsgemäße Baueinheit gemäß Fig. 1 mit weiteren Funktionseinheiten
- Fig. 7:: ein Kraftfahrzeug in perspektivischer Ansicht, bei welchem die erfindungsgemäße Baueinheit in der Kofferraumklappe angeordnet ist
- Fig. 8:: Teil eines Kraftfahrzeugs in perspektivischer Ansicht, bei welchem die erfindungsgemäße Baueinheit seitlich an einem der Kofferraumklappe zuordnenbaren festen Karosserieteil integriert ist und noch weitere zusätzliche Funktionseinheiten enthält.

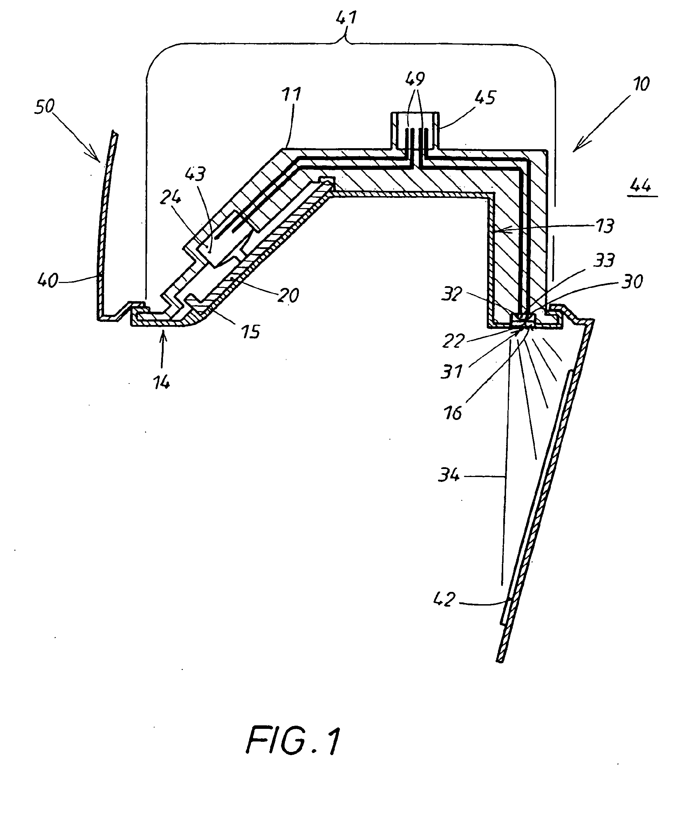

Die in Fig. 1 dargestellte Baueinheit 10 beinhaltet eine Handhabe 20 zur Betätigung eines beweglichen Karosserieteiles 40, beispielsweise einer Kofferraumklappe. Weiterhin beinhaltet die Baueinheit 10 eine Funktionseinheit 16, in diesem Fall eine Leuchte 30 zu Beleuchtung eines Fahrzeugkennzeichens 42. Die Handhabe 20 und die Funktionseinheit 16 sind in einem einzigen gemeinsamen Kombinationsgehäuse 11 integriert. Hierdurch sind in der Karosserie des Kraftfahrzeugs 50 weniger Öffnungen 41 nötig, was die Risiken der Undichtigkeit und des Diebstahls verringert. Das Kombinationsgehäuse 11 kann sowohl an dem beweglichen Karosserieteil 40 als auch an einem dem beweglichen Karosserieteil 40 zugeordneten festen Karosserieteil 48 angeordnet sein.

Das Kombinationsgehäuse 11 verfügt auf seiner Schauseite 14 über eine elastomere Verkleidung 15. Hierdurch ist der von dem beweglichen Karosserieteil 40 verschlossene Raum 45 besonders gut vor durch die Öffnungen 41 in der Karosserie dringende Feuchtigkeit geschützt. Die Funktionseinheit 16 ist hier wieder eine Leuchte 30, in diesem Fall eine Leuchtdiode 33 (LED), die hinter der Verkleidung 15 auf der Rückwand 13 des Kombinationsgehäuses 11 angeordnet ist. Hierdurch ist auch die Leuchte 30 vor Feuchtigkeit und mechanischer Beanspruchung geschützt. Die Verkleidung 15 verfügt im Bereich der Leuchte 30 über eine lichtdurchlässige Stelle 22, die die Funktion einer optischen Linse 23 aufweist, damit das von der Leuchte 30 abgegebene Licht 34 so gebündelt und/oder gestreut wird, dass das an der Lichtaustrittsstelle 31 austretende Licht 34 das Fahrzeugkennzeichen 42 gut ausgeleuchtet.

Hinter der Handhabe 20 ist eine Vorrichtung 24 zum Auslösen des Schlosses 21 angeordnet, in diesem Ausführungsbeispiel ein elektronischer Schalter 43, beispielsweise ein Mikroschalter. Bei Betätigung der Handhabe 20 wird so das Schloss 21 ausgelöst. Der elektronische Schalter 43 und die Funktionseinheit 16 verfügen über einen einzigen gemeinsamen Stecker 45 zur Verbindung der Anschlüsse 49 der Signalkommunikation und Spannungsversorgung, durch welchen sie mit der Fahrzeugelektronik verbindbar sind. Montage und Anschluss des Kombinationsgehäuses 11 werden hierdurch erheblich vereinfacht.

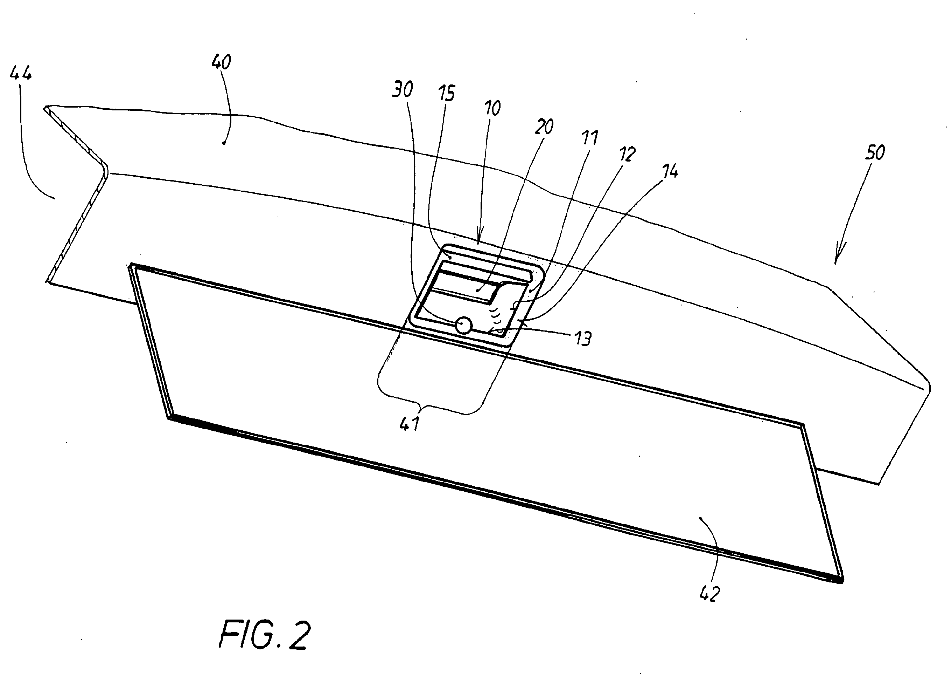

Fig. 2 zeigt ein Ausführungsbeispiel bei dem die Funktionseinheit 16, in diesem Fall wieder eine Leuchte 30 oder Lichtaustrittsstelle 31, an der Schauseite 14 des Kombinationsgehäuses 11 angeordnet ist. Es ist auch denkbar, die Funktionseinheit 16, insbesondere die Leuchte 30 oder Lichtaustrittsstelle 31, an der Verkleidung 15 anzubringen. Die Anordnung der Leuchte 30 oder Lichtaustrittsstelle kann in etwa punktförmig erfolgen, wie dargestellt. Es ist allerdings auch eine rahmenartige Anordnung denkbar, in der beispielsweise die Schauseite 14 des Kombinationsgehäuses 11 komplett von der Leuchte 30 oder Lichtaustrittsstelle 31 umfasst wird.

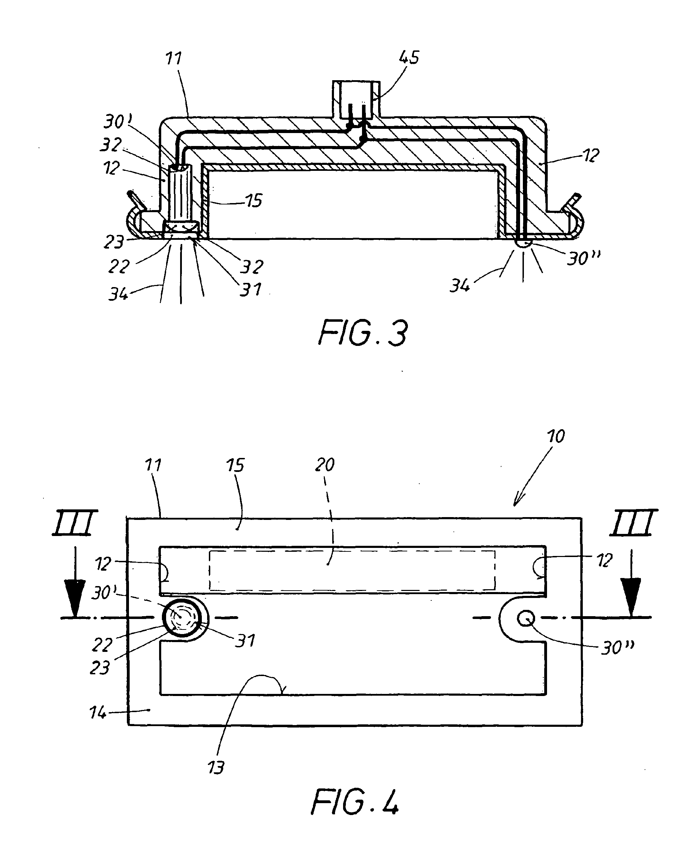

Weiterhin können zur Beleuchtung des Fahrzeugkennzeichens 42 auch zwei oder mehr Leuchten 30 vorgesehen sein. Fig. 3 und 4 zeigen eine Anordnung mit zwei als Leuchtdioden 33 ausgebildeten Leuchten 30, die in den Seitenwänden 12 des Kombinationsgehäuses 11 angeordnet sind, wobei die Handhabe 20 sich zwischen ihnen befindet. Durch diese Anordnung wird vermieden, dass bei Betätigung der Handhabe 20 die Leuchte 30 von der Hand abgedeckt wird.

Die Leuchten 30 selber können dabei an verschiedenen Stellen angeordnet sein. Beispielsweise könnte die Leuchte 30' sich hinter der elastomeren Verkleidung 15 befinden, damit sie geschützt wird. In diesem Fall könnte die Lichtaustrittsstelle 31 entweder in der elastomeren Verkleidung 15 angeordnet sein, oder ebenfalls dahinter, wobei die elastomere Verkleidung 15 dann über eine in diesem Bereich befindliche lichtdurchlässige Stelle 22, vorteilhafterweise mit der Funktion einer optischen Linse 23 ausgestattet, verfügen würde. Alternativ kann die Leuchte 30" sich auch direkt in der elastomeren Verkleidung 15 befinden.

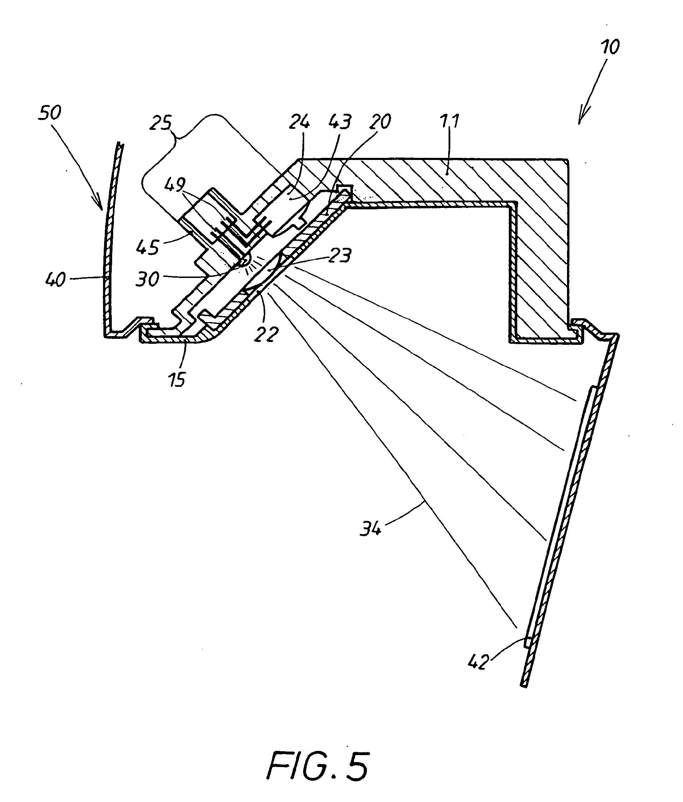

In einer weiteren Ausführungsform die in Fig. 5 dargestellt ist, umfasst die Funktionseinheit 16 eine Leuchte 30 oder Lichtaustrittsstelle 31, welche hinter der Handhabe 20 an der Vorderwand des Kombinationsgehäuses 11 angeordnet ist. Die Handhabe 20 ist im Bereich der Leuchte 30 oder Lichtaustrittsstelle 31 als optische Linse 23 ausgebildet, welche das von der Leuchte 30 oder Lichtaustrittsstelle 31 emittierte Licht 34 so bündelt und streut, dass das Fahrzeugkennzeichen 42 gut ausgeleuchtet wird. Die elastomere Verkleidung 15 ist im Bereich der Leuchte 30 oder Lichtaustrittsstelle 31 mit einer lichtdurchlässigen Stelle 22 versehen. Günstigerweise kann bei dieser Ausführungsform die Leuchte 30 bzw. Lichtaustrittsstelle 31 mit der Schlossauslösevorrichtung 24, die hier als elektronischer Schalter 43 ausgebildet ist, eine Baugruppe 25 bilden. Hierdurch wird die Montage des Kombinationsgehäuses 11 bzw. seiner Elemente weiter vereinfacht. Es ist auch denkbar, die Handhabe 20 entweder selbst als Leuchte 30 oder Lichtaustrittsstelle 31 auszubilden oder als Träger für diese zu verwenden. Die Baugruppe 25 verfügt empfehlenswerterweise über einen gemeinsamen Stecker 45 für die Anschlüsse 49 der Leuchte 30 oder Lichtaustrittsstelle 31 sowie der Schlossauslösevorrichtung 24.

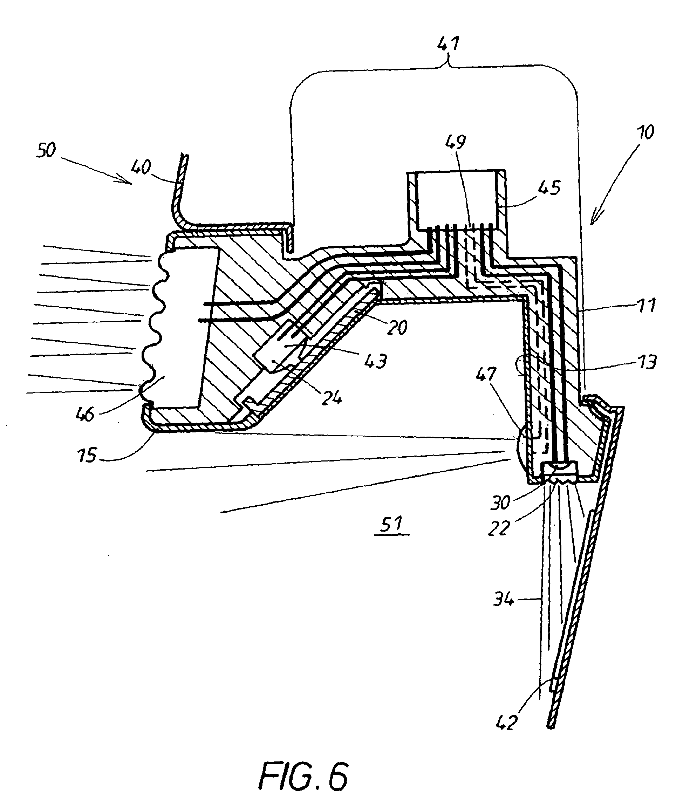

Zusätzlich können in dem Kombinationsgehäuse 11 zusätzlich noch ein oder mehrere weitere Funktionseinheiten 16 integriert sein. Hierbei ist es insbesondere vorteilhaft als Funktionseinheiten jeweils eine oder mehrere Bremswarnleuchten 46, Blinker 55, Rückfahrscheinwerfer 56, Nebelschlussleuchten, Rückleuchten 53 und/oder Schließzylinder 54 vorzusehen. Hierdurch wird die Zahl der Öffnungen 41 in der Karosserie weiter reduziert, was die bereits erwähnten Vorteile bezüglich Dichtigkeit und Diebstahlsicherheit noch verbessert. Fig. 6 zeigt eine Ausführungsform, bei der verschiedene Funktionseinheiten 16 in dem Kombinationsgehäuse 11 integriert sind, nämlich neben einer Leuchte 30, auch einer Kamera 47 sowie eine Bremswarnleuchte 46. In diesem Ausführungsbeispiel handelt es sich hierbei um eine mittig angebrachte dritte Bremswarnleuchte 46. Bei der Integration solcher Funktionseinheiten 16 sind günstigerweise mehrere oder alle elektrischen und elektronischen Anschlüsse 49 der Funktionseinheiten 16 und des elektronischen Schalters 43 in einem einzigen gemeinsamen Stecker 45 integriert.

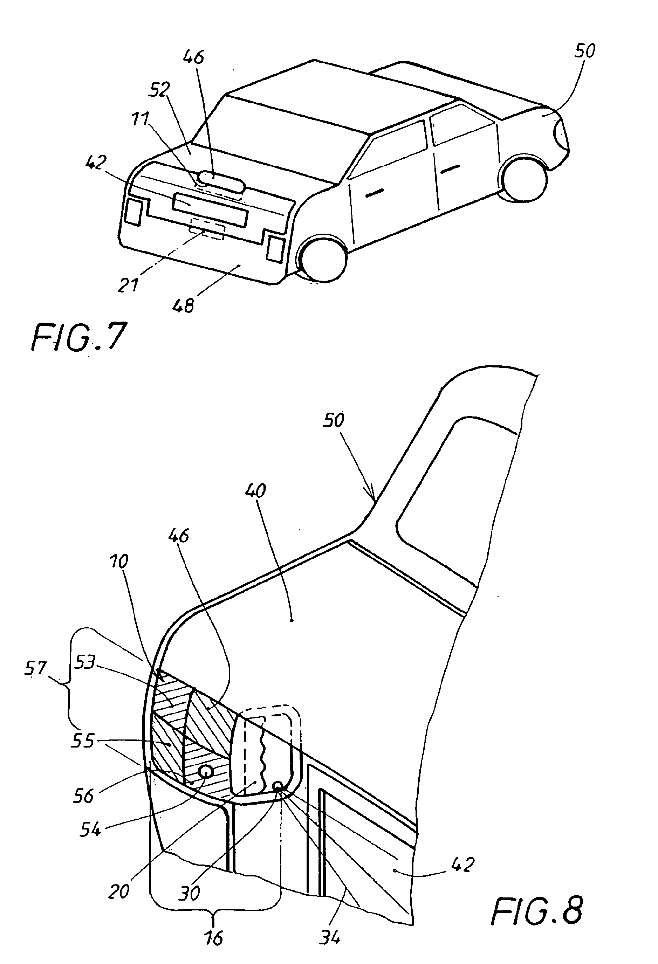

In einer bevorzugten Anwendung wird die Baueinheit 10 an einer Kofferraumklappe 52 eines Kraftfahrzeugs 50 angeordnet, welche als bewegliches Karosserieteil 40 fungiert. Dies ist aus Fig. 7 ersichtlich. Das Fahrzeugkennzeichen 42 befindet sich ebenfalls an der Kofferraumklappe 52. Das Kombinationsgehäuse 11 ist hier gestrichelt eingezeichnet, da es aus der betrachteten Perspektive nicht sichtbar ist. Jedoch beinhaltet es auch in dieser Ausführungsform eine dritte Bremswarnleuchte 46. Das die Kofferraumklappe 52 an dem festen Karosserieteil 48 sichernde Schloss 21 ist ebenfalls gestrichelt dargestellt, da es eigentlich von der Außenseite des Kraftfahrzeugs 50 aus nicht sichtbar ist.

In einer weiteren bevorzugten Ausführungsform wird die Baueinheit 10 seitlich an einer dem beweglichen Karosserieteil 40 zuordnenbaren festen Karosserieteil 48 angeordnet. Fig. 8 zeigt hier ein Ausführungsbeispiel, in dem die Baueinheit 10 seitlich des beweglichen Karosserieteiles 40, in diesem Fall der Kofferraumklappe, angeordnet ist. Die Baueinheit 10 verfügt über mehrere Funktionseinheiten 16, nämlich eine Leuchte 30 oder Lichtaustrittsstelle 31, eine Rückleuchte 53, einen Blinker 55, einen Rückfahrscheinwerfer 56, einen Schließzylinder 54 und eine Bremswarnleuchte 46, welche alle in einer Mehrkammerleuchte 57 integriert sind. Die Leuchte 30 ist hier an der Seitenwand 12 des Kombinationsgehäuses 11 angebracht und beleuchtet ein Fahrzeugkennzeichen 42.

Bei diesem Ausführungsbeispiel ist es besonders günstig, wenn als Lichtquelle 32 für die Lichtaustrittsstelle 31 das Licht der Rückleuchte 53 verwendet wird.

Um bei der Beleuchtung des Fahrzeugkennzeichens 42 weitere Möglichkeiten zu eröffnen, kann als Funktionseinheit 16 eine Leuchte 30 oder Lichtaustrittsstelle 31 verwendet werden, die mittels einer Steuerung durch eine Abfrage eines Betriebszustandes des Fahrzeugs 50 oder des beweglichen Karosserieteiles 40 die Farbe verändern kann. Ebenso ist es denkbar, mehrere farblich voneinander verschiedene Leuchten 30 oder Lichtaustrittsstellen 31 vorzusehen, die in Abhängigkeit des Betriebszustandes des Fahrzeugs 50 oder des beweglichen Karosserieteiles 40 an- bzw. ausgeschaltet werden. Die Verwendung einer solchen Anordnung bei einer Kofferraumklappe ermöglicht beispielsweise bei normalem Betrieb des Fahrzeugs 50 das Fahrzeugkennzeichen 42 mit weißem Licht und bei geöffneter Kofferraumklappe mit rotem Licht als Warnfunktion zu beleuchten. Als die Farbveränderung auslösenden Zustände kommen unter anderem die Lage des beweglichen Karosserieteiles 40, die Schlossabfrage des am beweglichen Karosserieteil 40 befindlichen Schlosses 21 oder die Abfrage des vom beweglichen Karosserieteil 40 verschlossenen Raumes 44.

Die hier dargestellten Ausführungsformen stellen lediglich beispielsweise Verwirklichungen der Erfindung dar. Diese ist nicht darauf beschränkt, sondern es sind vielmehr verschiedenste Abwandlungen und Ausführungen möglich. Es sind beispielsweise noch andere als die hier erwähnten Ausführungen von Funktionseinheiten denkbar, wobei auch beliebig viele Funktionseinheiten vorgesehen sein können. Außerdem ist eine fast beliebige Anordnung der Funktionseinheiten möglich. Als Funktionseinheiten können dabei Leuchten oder Lichtaustrittsstellen in verschiedensten Farben zur Anwendung kommen, die unterschiedliche Funktionen erfüllen. Außerdem kann die Funktionseinheit auch an verschiedenen Stellen angebracht sein, wie an der Motorhaube oder den Türaußengriffen, um beispielsweise auch andere schwer einsehbare Bereiche am Fahrzeug mit Kameras zu erfassen oder die Bereiche zu beleuchten. Das Fahrzeugkennzeichen kann sich sowohl an dem beweglichen als auch an dem diesem zugeordneten festen Karosserieteil befinden. Der Schlossauslösemechanismus kann nicht nur auf elektronischem Weg erfolgen, sondern auch auf mechanischem, sensorischem oder auch kapazitiv.

### Bezugszeichenliste:

- 10: Baueinheit
- 11: Kombinationsgehäuse
- 12: Seitenwand von 11
- 13: Rückwand von 11
- 14: Schauseite von 11
- 15: Elastomere Verkleidung
- 16: Funktionseinheit
- 20: Handhabe
- 21: Schloss
- 22: Lichtdurchlässige Stelle
- 23: Optische Linse
- 24: Schlossauslösevorrichtung
- 25: Baugruppe aus 31 oder 32 und 24
- 30: Leuchte
- 30': Ein erstes Ausführungsbeispiel zur Anordnung von 30
- 30": Ein weiteres Ausführungsbeispiel zur Anordnung von 30
- 31: Lichtaustrittsstelle
- 32: Lichtquelle
- 33: Leuchtdiode (LED)
- 34: Licht
- 40: Bewegliches Karosserieteil
- 41: Öffnungen in 40
- 42: Fahrzeugkennzeichen
- 43: Elektronischer Schalter
- 44: Von 40 verschlossener Raum
- 45: Stecker
- 46: Bremswarnleuchte
- 47: Kamera
- 48: Festes Karosserieteil
- 49: Anschluss
- 50: Kraftfahrzeug
- 51: Raum hinter 50
- 52: Kofferraumklappe von 50
- 53: Rückleuchte
- 54: Schließzylinder
- 55: Blinker
- 56: Rückfahrscheinwerfer
- 57: Mehrkammerleuchte

## Patentansprüche

1. Baueinheit (10), bestehend aus einer Handhabe (20) zur Betätigung eines Schlosses (21) für ein bewegliches Karosserieteil (40) eines Kraftfahrzeugs (50), insbesondere einer Klappe,
und aus wenigstens einer Funktionseinheit (16) welche weitere Funktionen aufweist
wobei die Handhabe (20) in einem Handhabegehäuse angeordnet ist, und sich die Funktionseinheit (16) ebenfalls in einem Gehäuse befindet,
und mit Öffnungen (41) in der Karosserie für die Aufnahme und/oder die Befestigung von Gehäusen,
**gekennzeichnet durch**,
ein einziges Kombinationsgehäuse (11), in welchem sowohl die Handhabe (20) als auch die Funktionseinheit (16) integriert sind,
wobei die Funktionseinheit (16) eine Leuchte (30) oder Lichtaustrittsstelle (31) beinhaltet, welche hinter der Handhabe (20) angeordnet ist, so dass diese als Träger der Funktionseinheit (16) dient,
dass die Handhabe (20) wenigstens bereichsweise eine lichtdurchlässige Stelle (22) aufweist,
und dass die Leuchte (30) oder Lichtaustrittsstelle (31) mit einer Vorrichtung (24) zum Auslösen des Schlosses (21) (Schlossauslösevorrichtung) eine Baugruppe (25) bildet.

2. Baueinheit (10) nach Anspruch 1, **dadurch gekennzeichnet, dass** die Leuchte (30) oder die Lichtaustrittsstelle (31) einer Lichtquelle (32), ein Fahrzeugkennzeichen (42) beleuchtet.

3. Baueinheit (10) nach Anspruch 2, **dadurch gekennzeichnet, dass** die Leuchte (30) eine Leuchtdiode (LED) (33) ist.

4. Baueinheit (10) nach einem der Ansprüche 1 bis 3, **dadurch gekennzeichnet, dass** die Funktionseinheit (16) zusätzlich eine Kamera (47) beinhaltet, die den Raum (51) hinter dem Kraftfahrzeug (50) erfasst.

5. Baueinheit (10) nach einem der Ansprüche 1 bis 4, **dadurch gekennzeichnet, dass** die Funktionseinheit (16) sich in den Seitenwänden (12) des Kombinationsgehäuses (11) neben der Handhabe (20) befindet.

6. Baueinheit (10) nach einem der Ansprüche 1 bis 5, **dadurch gekennzeichnet, dass** die Funktionseinheit (16) sich in der Rückwand (13) des Kombinationsgehäuses (11) befindet.

7. Baueinheit (10) nach einem der Ansprüche 1 bis 6, **dadurch gekennzeichnet, dass** die Funktionseinheit (16) sich auf der Schauseite (14) des Kombinationsgehäuses (11) befindet.

8. Baueinheit (10) nach Anspruch 7, **dadurch gekennzeichnet, dass** die Leuchte (30) oder Lichtaustrittsstelle (31) die Schauseite (14) des Kombinationsgehäuses (11) rahmenartig umschließt.

9. Baueinheit (10) nach einem der Ansprüche 1 bis 8, **dadurch gekennzeichnet, dass** auf der Schauseite (14) des Kombinationsgehäuses (11) eine elastomere Verkleidung (15) sich befindet, unterhalb derer die Handhabe (20) und die Schlossauslösevorrichtung (24) angeordnet sind,
dass die Leuchte (30) oder Lichtaustrittsstelle (31) sich hinter der Verkleidung (15) befindet,
und dass die Verkleidung (15) im Bereich der Leuchte (30) oder Lichtaustrittsstelle (31) eine lichtdurchlässige Stelle (22) enthält.

10. Baueinheit (10) nach Anspruch 9, **dadurch gekennzeichnet, dass** die lichtdurchlässige Stelle (22) die Funktion einer optischen Linse (23) ausübt.

11. Baueinheit (10) nach einem der Ansprüche 1 bis 10, **dadurch gekennzeichnet, dass** auf der Schauseite (14) des Kombinationsgehäuses (11) eine elastomere Verkleidung (15) sich befindet, unterhalb derer die Handhabe (20) und die Schlossauslösevorrichtung (24) angeordnet sind,
und dass die Funktionseinheit (16) in der Verkleidung (15) angeordnet ist.

12. Baueinheit (10) nach einem der Ansprüche 1 bis 11, **dadurch gekennzeichnet, dass** diese mehrere voneinander unabhängige Funktionseinheiten (16) enthält, die Leuchten (30) oder Lichtaustrittsstellen (31) sind, welche sich farblich voneinander unterscheiden,
und dass diese mittels einer Abfrage von Betriebszuständen des Kraftfahrzeugs (50) oder des beweglichen Karosserieteiles (40) in Abhängigkeit von diesen wirksam und/oder unwirksam schaltbar sind.

13. Baueinheit (10) nach einem der Ansprüche 1 bis 12, **dadurch gekennzeichnet, dass** die Leuchte (30) oder Lichtaustrittsstelle (31) sich mittels einer Abfrage von Betriebszuständen des Kraftfahrzeugs (50) oder des beweglichen Karosserieteiles (40) in Abhängigkeit von diesen sich farblich verändert.

14. Baueinheit (10) nach einem der Ansprüche 12 oder 13, **dadurch gekennzeichnet, dass** als Abfrage zum wirksam und/oder unwirksam Schalten bzw. zum Auslösen der farblichen Veränderung der Leuchte (30) oder Lichtaustrittsstelle (31) die Lage des beweglichen Karosserieteiles (40) genutzt wird.

15. Baueinheit (10) nach einem der Ansprüche 12 oder 13, **dadurch gekennzeichnet, dass** als Abfrage zum wirksam und/oder unwirksam Schalten bzw. zum Auslösen der farblichen Veränderung der Leuchte (30) oder Lichtaustrittsstelle (31) die Schlossabfrage des am beweglichen Karosserieteil (40) befindlichen Schlosses (21) genutzt wird.

16. Baueinheit (10) nach einem der Ansprüche 12 oder 13, **dadurch gekennzeichnet, dass** als Abfrage zum wirksam und/oder unwirksam Schalten bzw. zum Auslösen der farblichen Veränderung der Leuchte (30) oder Lichtaustrittsstelle (31) die Abfrage des vom beweglichen Karosserieteil (40) verschlossenen Raumes (44) genutzt wird.

17. Baueinheit (10) nach einem der Ansprüche 1 bis 16, **dadurch gekennzeichnet, dass** die Schlossauslösevorrichtung (24) einen elektronischen Schalter (43) beinhaltet,
dass der elektronische Schalter (43) und/oder die Funktionseinheit (30) Signale an bzw. von einer im Kraftfahrzeug (50) befindlichen Elektronik aussenden und/oder empfangen können
und dass die Anschlüsse (49) der Signalkommunikation sowie der Spannungsversorgung des elektronischen Schalters (43) und/oder der Funktionseinheit (30) über einen einzigen gemeinsamen Stecker (45) mit der Elektronik im Kraftfahrzeug (50) verbunden sind.

18. Baueinheit (10) nach einem der Ansprüche 1 bis 17, **dadurch gekennzeichnet, dass** die Funktionseinheit (16) eine Bremswarnleuchte (46) beinhaltet.

19. Baueinheit (10) nach einem der Ansprüche 1 bis 18, **dadurch gekennzeichnet, dass** die Funktionseinheit (16) einen Blinker (55) beinhaltet.

20. Baueinheit (10) nach einem der Ansprüche 1 bis 19, **dadurch gekennzeichnet, dass** die Funktionseinheit (16) einen Rückfahrscheinwerfer (56) beinhaltet.

21. Baueinheit (10) nach einem der Ansprüche 1 bis 20, **dadurch gekennzeichnet, dass** die Funktionseinheit (16) eine Nebelschlussleuchte beinhaltet.

22. Baueinheit (10) nach einem der Ansprüche 1 bis 21, **dadurch gekennzeichnet, dass** die Funktionseinheit (16) einen Schließzylinder (54) beinhaltet.

23. Baueinheit (10) nach einem der Ansprüche 1 bis 22, **dadurch gekennzeichnet, dass** die Funktionseinheit (16) eine Rückleuchte (53) beinhaltet.

24. Baueinheit (10) nach Anspruch 23, **dadurch gekennzeichnet, dass** als Lichtquelle (32) der Lichtaustrittsstelle (31) die Rückleuchte (53) dient.

25. Baueinheit (10) nach einem der Ansprüche 1 bis 24, **dadurch gekennzeichnet, dass** die Baueinheit (10) an dem beweglichen Karosserieteil (40) angeordnet ist.

26. Baueinheit (10) nach einem der Ansprüche 1 bis 25, **dadurch gekennzeichnet, dass** die Baueinheit (10) an einem dem beweglichen Karosserieteil (40) zuordnenbaren festen Karosserieteil (48) angeordnet ist.

27. Baueinheit (10) nach Anspruch 26, **dadurch gekennzeichnet, dass** die Baueinheit (10) in einer Mehrkammerleuchte (57) integriert ist.

## Claims

1. Assembly (10) consisting of a handle (20) for actuating a lock (21) for a movable bodywork part (40) of a motor vehicle (50), particularly a boot lid or hatch,
and at least one functional unit (16) which has further functions,
the handle (20) being arranged in a handle housing and the functional unit (16) also being located in a housing,
and with openings (41) in the bodywork for accommodating and / or attaching housings,
**characterised by**:
a single combined housing (11) in which both the handle (20) and the functional unit (16) are integrated,
wherein the functional unit (16) contains a light (30) or light exit point (31) which is disposed behind the handle (20) so that the latter acts as a carrier for the functional unit (16),
wherein at least part of the handle (20) has a translucent area (22),
and the light (30) or light exit point (31) forms a unit (25) with an apparatus (24) for actuating the lock (21) (lock actuating device).

2. Assembly (10) according to claim 1, **characterised in that** the light (30) or the light exit point (31) of a light source (32) illuminates a vehicle licence plate (42).

3. Assembly (10) according to claim 2, **characterised in that** the light (30) is a light emitting diode (LED) (33).

4. Assembly (10) according to one of claims 1 to 3, **characterised in that** the functional unit (16) additionally contains a camera (47) which records the area (51) behind the vehicle (50).

5. Assembly (10) according to one of claims 1 to 4, **characterised in that** the functional unit (16) is located in the side walls (12) of the combined housing (11) adjacent to the handle (20).

6. Assembly (10) according to one of claims 1 to 5, **characterised in that** the functional unit (16) is located in the rear wall (13) of the combined housing (11).

7. Assembly (10) according to one of claims 1 to 6, **characterised in that** the functional unit (16) is located on the visible side (14) of the combined housing (11).

8. Assembly (10) according to claim 7, **characterised in that** the light (30) or light exit point (31) surrounds the visible side (14) of the combined housing (11) in the manner of a frame.

9. Assembly (10) according to one of claims 1 to 8, **characterised in that** on the visible side (14) of the combined housing (11) is an elastomeric cladding (15) underneath which are mounted the handle (20) and the lock actuating device (24),
**in that** the light (30) or light exit point (31) is located behind the cladding (15),
and **in that** the cladding (15) contains in the region of the light (30) or light exit point (31) a translucent area (22).

10. Assembly (10) according to claim 9, **characterised in that** the translucent area (22) performs the function of an optical lens (23).

11. Assembly (10) according to one of claims 1 to 10, **characterised in that** on the visible side (14) of the combined housing (11) is an elastomeric cladding (15) underneath which are mounted the handle (20) and the lock actuating device (24),
and **in that** the functional unit (16) is arranged in the cladding (15) .

12. Assembly (10) according to one of claims 1 to 11, **characterised in that** it contains a plurality of independent functional units (16) which are lights (30) or light exit points (31) which differ from one another in their colour,
and **in that** they can be switched to "active" and / or "inactive " by monitoring the operational states of the vehicle (50) or of the movable bodywork part (40) as a function thereof.

13. Assembly (10) according to one of claims 1 to 12, **characterised in that** the light (30) or light exit point (31) changes colour as a result of a monitoring of operational states of the vehicle (50) or of the movable bodywork part (40) as a function thereof.

14. Assembly (10) according to one of claims 12 or 13, **characterised in that** the position of the movable bodywork part (40) is used as the monitoring means for switching on and / or off or for initiating the change in colour of the light (30) or light exit point (31).

15. Assembly (10) according to one of claims 12 or 13, **characterised in that** monitoring of the locking of the lock (21) located on the movable bodywork part (40) is used as the monitoring means for switching on and / or off or initiating the change in colour of the light (30) or light exit point (31).

16. Assembly (10) according to one of claims 12 or 13, **characterised in that** monitoring of the space (44) closed off by the movable bodywork part (40) is used as the monitoring means for switching on and / or off or for initiating the change in colour of the light (30) or light exit point (31).

17. Assembly (10) according to one of claims 1 to 16, **characterised in that** the lock actuating device (24) comprises an electronic switch (43),
**in that** the electronic switch (43) and / or the functional unit (30) is able to transmit and / or receive signals to or from an electronic system located in the motor vehicle (50)
and **in that** the connections (49) of the signal communications and the voltage supply to the electronic switch (43) and / or the functional unit (30) are connected to the electronics in the vehicle (50) via a single common plug (45).

18. Assembly (10) according to one of claims 1 to 17, **characterised in that** the functional unit (16) comprises a brake warning light (46).

19. Assembly (10) according to one of claims 1 to 18, **characterised in that** the functional unit (16) comprises a blinker (55).

20. Assembly (10) according to one of claims 1 to 19, **characterised in that** the functional unit (16) comprises a reversing light (56).

21. Assembly (10) according to one of claims 1 to 20, **characterised in that** the functional unit (16) comprises a fog light.

22. Assembly (10) according to one of claims 1 to 21, **characterised in that** the functional unit (16) comprises a lock cylinder (54).

23. Assembly (10) according to one of claims 1 to 22, **characterised in that** the functional unit (16) comprises a rear light (53).

24. Assembly (10) according to claim 23, **characterised in that** the rear light (53) serves as a light source (32) for the light exit point (31).

25. Assembly (10) according to one of claims 1 to 24, **characterised in that** the assembly (10) is mounted on the movable bodywork part (40).

26. Assembly (10) according to one of claims 1 to 25, **characterised in that** the assembly (10) is mounted on a fixed bodywork part (48) which is adapted to be associated with the movable bodywork part (40).

27. Assembly (10) according to claim 26, **characterised in that** the assembly (10) is integrated in a multi-chamber light (57).

## Revendications

1. Ensemble (10), composé d'une poignée (20) pour l'actionnement d'une serrure (21) et d'une partie de carrosserie (40) mobile d'un véhicule automobile (50), en particulier d'un volet ou capot,
et d'au moins une unité fonctionnelle (16) présentant d'autres fonctions,
la poignée (20) étant disposée dans un boîtier à poignée et l'unité fonctionnelle (16) se trouve également dans un boîtier,
et avec des ouvertures (41) ménagées dans la carrosserie, pour loger et/ou fixer des boîtiers,
**caractérisé par**
un boîtier combiné (11) unique, dans lequel sont intégrées tant la poignée (20), qu'également l'unité fonctionnelle (16),
l'unité fonctionnelle (16) contenant un luminaire (30) ou un point de sortie de lumière (31), disposé derrière la poignée (20), de manière que celle-ci serve de support à l'unité fonctionnelle (16),
en ce que la poignée (20) présente, au moins par zones, un emplacement (22) transparent à la lumière,
en ce que le luminaire (30) ou le point de sortie de lumière (31) forme, avec un dispositif (20) de déclenchement de la serrure (21) (dispositif de déclenchement de serrure), un groupe (25) .

2. Ensemble (10) selon la revendication 1, **caractérisé en ce que** le luminaire (30) ou le point de sortie de lumière (31) d'une source de lumière (32) éclaire une caractéristique de véhicule (42).

3. Ensemble (10) selon la revendication 2, **caractérisé en ce que** le luminaire (30) est une photodiode (LED) (33).

4. Ensemble (10) selon l'une des revendications 1 à 3, **caractérisé en ce que** l'unité fonctionnelle (16) contient en plus une caméra (47), appréhendant l'espace (51) se trouvant derrière le véhicule automobile (50).

5. Ensemble (10) selon l'une des revendications 1 à 4, **caractérisé en ce que** l'unité fonctionnelle (16) se trouve dans les parois latérales (12) du boîtier combiné (11), à côté de la poignée (20).

6. Ensemble (10) selon l'une des revendications 1 à 5, **caractérisé en ce que** l'unité fonctionnelle (16) se trouve dans la paroi arrière (13) du boîtier combiné (11).

7. Ensemble (10) selon l'une des revendications 1 à 6, **caractérisé en ce que** l'unité fonctionnelle (16) se trouve sur la face visible (14) du boîtier combiné (11).

8. Ensemble (10) selon la revendication 7, **caractérisé en ce que** le luminaire (30) ou le point de sortie de lumière (31) entoure, à la façon d'un cadre, la face visible (14) du boîtier combiné (11).

9. Ensemble (10) selon l'une des revendications 1 à 8, **caractérisé en ce que**, sur la face visible (14) du boîtier combiné (11), se trouve un habillage (15) élastomère, au-dessous duquel sont disposés la poignée (20) et le dispositif de déclenchement de serrure (24),
**en ce que** le luminaire (30), ou le point de sortie de lumière (31), se trouve derrière l'habillage (15),
et **en ce que** l'habillage (15) contient, dans la zone du luminaire (30) ou du point de sortie de lumière (31), un emplacement (22) transparent à la lumière.

10. Ensemble (10) selon la revendication 9, **caractérisé en ce que** l'emplacement (22) transparent à la lumière exerce la fonction d'une lentille optique (23).

11. Ensemble (10) selon l'une des revendications 1 à 10, **caractérisé en ce que**, sur la face visible (14) du boîtier combiné (11), se trouve un habillage (15) élastomère, au-dessous duquel sont disposés la poignée (20) et le dispositif de déclenchement de serrure (24),
et **en ce que** l'unité fonctionnelle (16) est disposée dans l'habillage (15).

12. Ensemble (10) selon l'une des revendications 1 à 11, **caractérisé en ce que** celui-ci contient une pluralité d'unités fonctionnelles (16) indépendantes les unes des autres, qui sont des luminaires (30) ou des points de sortie de lumière (31), se distinguant les uns des autres par la couleur,
et **en ce que** celles-ci, au moyen d'une interrogation des états de fonctionnement du véhicule automobile (50) ou de la partie de carrosserie (40) mobile, sont commutables, indépendamment de ceux-ci, pour passer en action et/ou hors d'action.

13. Ensemble (10) selon l'une des revendications 1 à 12, **caractérisé en ce que** le luminaire (30) ou le point de sortie de la lumière (31), au moyen d'une interrogation concernant les états de fonctionnement du véhicule automobile (50) ou de la partie de carrosserie (40) mobile, change de couleur, indépendamment de ceux-ci.

14. Ensemble (10) selon l'une des revendications 12 ou 13, **caractérisé en ce que**, en tant qu'interrogation pour obtenir la commutation à l'état actif et/ou inactif, ou pour déclencher la modification de couleur du luminaire (30), ou du point de sortie de lumière (31), on utilise la position de la partie de carrosserie (40) mobile.

15. Ensemble (10) selon l'une des revendications 12 ou 13, **caractérisé en ce que**, en tant qu'interrogation, pour effectuer la commutation à l'état actif et/ou inactif, ou pour déclencher la modification de couleur du luminaire (30) ou du point de sortie de lumière (31), on utilise l'interrogation de la serrure, concernant la serrure (21) se trouvant sur la partie de carrosserie (40) mobile.

16. Ensemble (10) selon l'une des revendications 12 ou 13, **caractérisé en ce que**, en tant qu'interrogation pour obtenir la commutation à l'état actif et/ou inactif, ou pour déclencher la modification de couleur du luminaire (30) ou du point de sortie de lumière (31), on utilise l'interrogation de l'espace (44) fermé par la partie de carrosserie (40) mobile.

17. Ensemble (10) selon l'une des revendications 1 à 16, **caractérisé en ce que** le dispositif de déclenchement de serrure (24) contient un interrupteur (43) électronique,
**en ce que** l'interrupteur (43) électronique et/ou l'unité fonctionnelle (30) peu(ven)t envoyer et/ou recevoir des signaux à, ou depuis, une unité se trouvant dans le véhicule automobile (50),
et **en ce que** les raccordements (49) de la communication de signalisation, ainsi que de l'alimentation en tension de l'interrupteur (43) électronique et/ou de l'unité fonctionnelle (30), sont reliés à l'électronique installée dans le véhicule automobile (50), par une prise mâle (45) commune, unique.

18. Ensemble (10) selon l'une des revendications 1 à 17, **caractérisé en ce que** l'unité fonctionnelle (16) contient un feu d'avertissement de freinage (46).

19. Ensemble (10) selon l'une des revendications 1 à 18, **caractérisé en ce que** l'unité fonctionnelle (16) contient un clignotant (55).

20. Ensemble (10) selon l'une des revendications 1 à 19, **caractérisé en ce que** l'unité fonctionnelle (16) contient un projecteur de marche arrière (56).

21. Ensemble (10) selon l'une des revendications 1 à 20, **caractérisé en ce que** l'unité fonctionnelle (16) contient un feux arrière antibrouillard.

22. Ensemble (10) selon l'une des revendications 1 à 21, **caractérisé en ce que** l'unité fonctionnelle (16) contient un cylindre de fermeture (54).

23. Ensemble (10) selon l'une des revendications 1 à 22, **caractérisé en ce que** l'unité fonctionnelle (16) contient un feu arrière (53).

24. Ensemble (10) selon la revendication 23, **caractérisé en ce que** le feu arrière (53) sert de source de lumière (32) pour le point de sortie de lumière (31).

25. Ensemble (10) selon l'une des revendications 1 à 24, **caractérisé en ce que** l'ensemble (10) est disposé sur la partie de carrosserie (40) mobile.

26. Ensemble (10) selon l'une des revendications 1 à 25, **caractérisé en ce que** l'ensemble (10) est disposé sur une partie de carrosserie (48) fixe, susceptible d'être associée à la partie de carrosserie (40) mobile.

27. Ensemble (10) selon la revendication 26, **caractérisé en ce que** l'ensemble (10) est intégré dans un luminaire à plusieurs chambres (57).
